# EUROPEAN PATENT APPLICATION

(11) **EP 2 732 936 A1**
(43) Date of publication of application: **21.05.2014**
(21) Application number: 13005106.3
(22) Date of filing: 25.10.2013
(51) Int. Cl.: B25J 15/02

(54) **Gripper with remote cable drive**

(30) Priority: 26.10.2012 US 201261718772 P
(71) Applicant: PHD, Inc., Fort Wayne, IN 46809 (US)
(72) Inventor: Davis, James M., Grabill, IN 46741 (US); Williams, Matthew R., Fort Wayne, IN 46807 (US); Null, Lyle A., Markle, In 46770 (US); Shepherd, Scott Alan, Hoagland, IN 46745 (US)
(74) Representative: Sawodny, Michael-Wolfgang

(57) **Abstract**

A device for gripping an object including a gripper head, an actuator, and a cable assembly. The gripper head includes at least one movable jaw. The actuator is located remotely from the gripper head. The cable assembly connects the gripper head to the actuator and is configured to drive the gripper head by the actuator.

## Description

### Cross Reference To Related Applications

This is a non-provisional application based upon U.S. provisional patent application serial no. 61/718,772, entitled "GRIPPER WITH REMOTE CABLE DRIVE", filed October 26, 2012, which is incorporated herein by reference.

### BACKGROUND OF THE INVENTION

### 1. Field of the Invention

The present invention relates to grippers, and, more particularly, to grippers that have at least one movable jaw.

### 2. Description of the Related Art

Grippers are mechanical devices characterized by one or more jaws that are moved together or apart by motive means such as an electric motor or pneumatic piston. Once moved into a position of contact with the gripped workpiece, the jaws produce a gripping force against the workpiece so that the position of the workpiece might be subsequently translated or rotated. It is often desirable to minimize the mass of the gripper, especially in applications involving integration of the gripper as an end effector onto robots, where the mass of the gripper correspondingly reduces the mass of the workpiece that the robot can manipulate. Physically separating the components of the gripper responsible for moving and guiding the jaws from those components responsible for generating the motive force provides an effective means of reducing the mass that the robot must manipulate. Historically, this component separation has been accomplished by the use of fluid power transmission. A pump or compressor, often located some distance away from the robot, provides pressurized fluid through an appropriate network of valves, pipes, and flexible tubes to a piston that moves the gripping jaws. Only the piston and those components required to move and guide the jaws are mounted on the movable portion of the robot. However, there are applications that dictate the use of electric power as a motive means. Electric motors are typically employed in these applications to convert electric current into torque, with the torque subsequently converted into linear force to drive the gripping jaws. Williams, et al, disclose such prior art in US Pat. No. 8,152,214 B2. Methods used in the prior art to couple the mechanical output of the motor to the mechanism moving the jaws typically necessitate close physical proximity of the motor to the jaws. Such methods suffer the disadvantage of adding the relatively large mass of the motor to the total mass that a robot or machine must move when the gripper is used as an end effector.

What is needed in the art is a gripper with less integrally associated mass that the gripper must carry during operation.

### SUMMARY OF THE INVENTION

The present invention is directed to a gripper that includes a gripper head with at least one movable jaw; an actuator located remotely from the gripper head; and a cable assembly that connects the actuator to the gripper head and is configured to drive the gripper head by the actuator.

An advantage of the present invention is that the relatively heavy actuator driving the gripper head doesn't need to be carried by the gripper during operation, which allows the gripper to handle workpieces with more mass.

Another advantage of the present invention is that motors can be used to remotely drive the gripper head, allowing those skilled in the art to have greater versatility in components to drive the gripper head.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:

Fig. 1 is an exploded perspective view of an embodiment of the invention;

Fig. 2 is a perspective view of an embodiment of a cable assembly of the invention;

Fig. 3 is a cross-sectional perspective view of an embodiment of a cable assembly of the invention;

Fig. 4 is a multi-perspective exploded view of an embodiment of a force transmitter of the invention;

Fig. 5 is a perspective view of another embodiment of a cable assembly of the invention;

Fig. 6 is a cross-sectional perspective view of another embodiment of a cable assembly of the invention;

Fig. 7 is a perspective and partially cross-sectional view of another embodiment of a cable assembly of the invention;

Fig. 8 is an exploded perspective view of yet another embodiment of the invention;

Fig. 9 is an exploded perspective view of yet another embodiment of the invention;

Fig. 10 is a perspective view of yet another embodiment of a cable assembly of the invention;

Fig. 11 is a perspective cross-sectional view of yet another embodiment of a cable assembly of the invention;

Fig. 12 is a multi-perspective view of another embodiment of a force transmitter of the invention;

Fig. 13 is a multi-perspective view of another embodiment of a force transmitter of the invention; and

Fig. 14 is an exploded perspective view of yet another embodiment of the invention.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

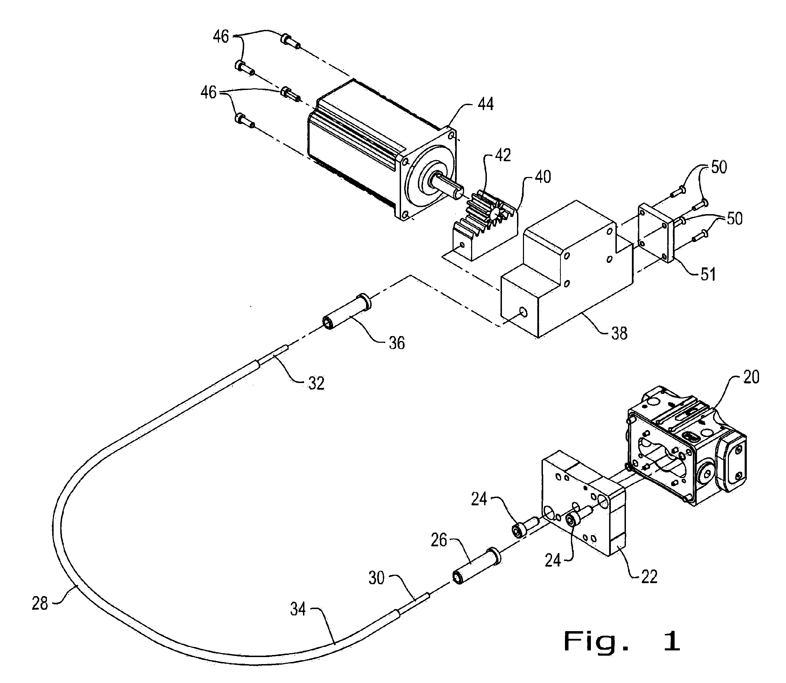

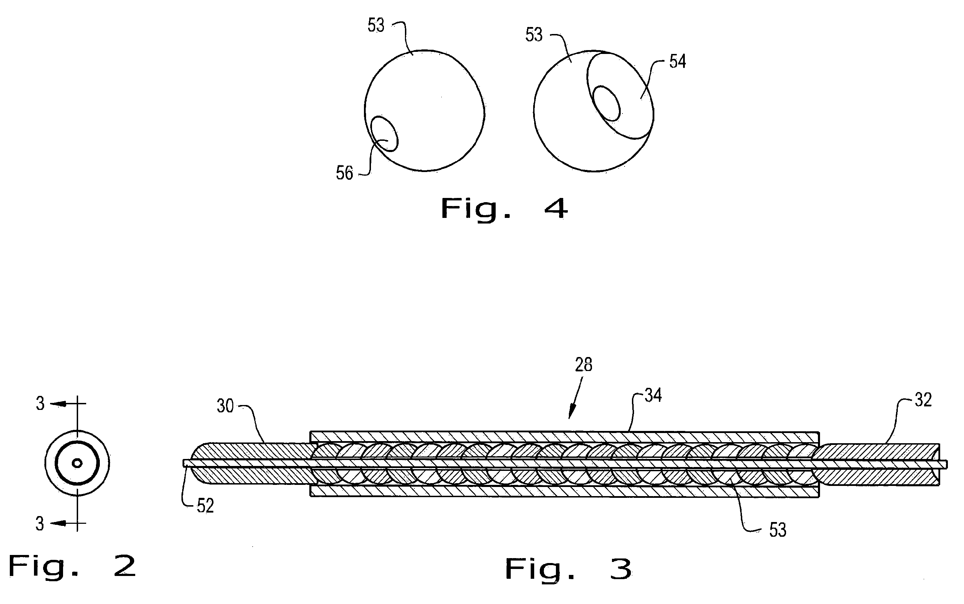

Referring now to the drawings, and more particularly to Fig. 1, there is shown a gripper which generally includes a gripper head 20 that includes the gripping jaws and those components responsible for moving and guiding the jaws. A cover 22 is attached to the gripper head 20 with threaded fasteners 24. A ferrule 26 is attached to the cover 22 by adhesive bonding or other suitable means. An output end 30, shown in Fig. 1 as a rod, of a cable assembly 28 passes through axially aligned holes in the ferrule 26 and in the cover 22 and is attached by threading or other suitable means to the appropriate component within the gripper head 20 responsible for moving the gripper jaws. The opposing end of the ferrule 26 is threaded or adhesively bonded onto the distal end of a sheath 34 of the cable assembly 28 (see also Fig. 3). The proximal end of the sheath 34 is threaded or adhesively bonded into a ferrule 36. The opposing end of the ferrule 36 is attached to a motor housing 38 by adhesive bonding or other suitable means. An input end 32, shown as a rod, of the cable assembly 28 passes through a hole in the motor housing 38 and is threaded into a rack 40. A pinion 42 is engaged into the rack 40 and coupled to the shaft of an actuator 44, shown here as a motor, to convert the rotary motion of the motor 44 into a corresponding linear motion of the rack 40 and in turn, into a corresponding linear motion of the output end 30 to move the gripper jaws. While Fig. 1 shows a linear converter embodied as a rack 40 and a pinion 42, those skilled in the art will appreciate that any component capable of converting rotary motion into linear motion can be used in the place of the rack 40 and the pinion 42. Threaded fasteners 46 attach the motor 44 to the motor housing 38. A cover 51 is attached with threaded fasteners 50 to close the open cavity in the motor housing 38.

Although Figs. 1-14 show and reference an actuator driving the gripper as a rotary electric motor, it is understood that such an embodiment may also be applied to a gripper including a linear electric motor, or a piston and cylinder arranged to generate motive force. It is also understood that the embodiment may be applied to any type or style of gripper in order to physically separate the components of the gripper responsible for moving and guiding the jaws from those components responsible for generating the motive force. It is further understood that such an embodiment may also be applied to actuators or end effectors other than grippers without changing the substance of the invention.

The cable assembly 28 can be any construction capable of transmitting both tensile and compressive forces, while allowing sufficient flexure to accommodate relative motion between the gripper head 20 and actuator. Ideally, the transmission of the tensile and compressive forces though the cable assembly 28 occurs with minimal or substantially no parasitic loss so that the majority of the force applied to the input end 32 of the cable assembly 28 is available at the output end 30 to move the jaws of the gripper. Such cable assemblies are used in the steering systems for small marine vessels.

Figs. 2, 3 and 4 show one embodiment of the cable assembly 28. Fig 3 shows a section view along the longitudinal axis of the cable assembly 28. A short length of the cable assembly 28 is shown for illustrative purposes and it is understood that the overall length of the cable assembly 28 can be increased or decreased as desired. Fig. 4 shows rendered perspective views of a spherical bead 53. The input end 32 and output end 30 bound a plurality of spherical beads 53 and a cable 52, which are surrounded by a flexible sheath 34. The cable 52 can include a braid of polymer filaments, although cables including braided or twisted metal strands can also be used. The proximal end of the cable 52 is adhesively bonded into a complimentary central bore in the input end 32. A central bore 56 in each bead 53 allows the plurality of beads to be strung along a length of the cable 52. A complimentary spherical cavity 54 on one end of each bead 53 allows each bead 53 to nest and be nested by adjacent beads 53 so that the column of beads shares a common centerline. As the cable assembly 28 is laterally flexed, each bead 53 is free to rotate unencumbered about the center of its spherical diameter while maintaining a common line of contact with an adjacent bead. In this manner, the line of contact between each adjacent pair of beads remains normal to the radius of curvature of the flexed sheath 28. The input end 32 and output end 30 possess a spherical radius on one end and a complimentary spherical cavity on the opposing end in an analogous manner to the beads 50. The spherical radius on the end of the input end 32 allows the end to nest into the complimentary spherical cavity 54 on the first bead 53 on the proximal end of the cable assembly 28 and the spherical cavity on the end of the output end 30 allows the end to nest over the spherical radius of the last bead 53 on the distal end of the cable assembly 28. The distal end of the cable 52 passes through a complimentary central bore in the output end 30. The cable 52 is stretched to remove all clearance between the input end 32, beads 53 and the output end 30 and create a desired level of tension in the cable. While in this stretched state, the distal end of the cable 52 is adhesively bonded to the bore in the output end 30. The tensioned column of the input and output ends 32, 30 and beads 53 is inserted through the inner bore of the sheath 34 to complete the cable assembly 28. The resulting cable assembly 28 is capable of transmitting compressive force from one end of the assembly to the other end as each spherical bead 53 presses against an adjacent bead in the column. The cable assembly 28 is also able to transmit tensile force through the cable 52.

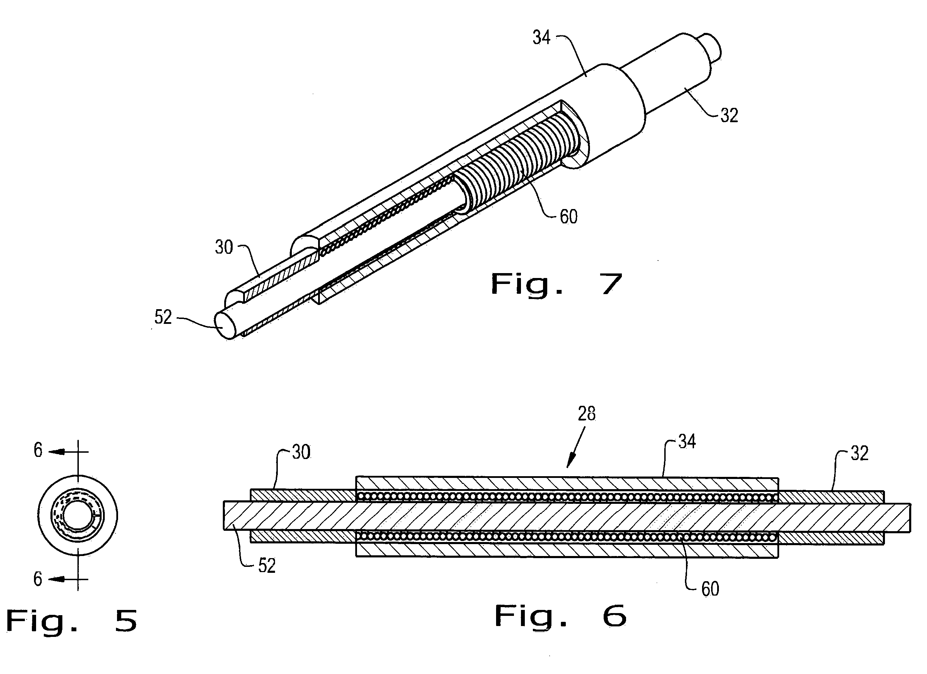

Figs. 5, 6 and 7 show another embodiment of the cable assembly 28. Fig. 6 shows a section view along the longitudinal axis of the cable assembly 28. A short length of the cable assembly 28 is shown for illustrative purposes and it is understood that the overall length of the assembly can be increased or decreased as desired. Fig. 7 shows a partially sectioned perspective view of the cable assembly 28. The input end 32 and output end 30 bound a length of a helical extension spring 60 and a cable 52, which are surrounded by a flexible sheath 34. The cable 52 can include a braid of polymer filaments, although cables including braided or twisted metal strands can also be used. The proximal end of the cable 52 is adhesively bonded into a complimentary central bore in the input end 32. The distal end of the cable 52 passes through a complimentary central bore in the output end 30. The cable 52 is stretched to remove all clearance between the input end 32, helical extension spring 60 and output end 30 and create a desired level of tension in the cable 52. While in this stretched state, the distal end of the cable 52 is adhesively bonded to the bore in the output end 30. The tensioned column of the input and output ends 32, 30 and spring 60 is inserted through the inner bore of the sheath 34 to complete the cable assembly 28. The resulting cable assembly 28 is capable of transmitting compressive force from one end of the cable assembly 28 to the other end as each spring winding 60 presses against an adjacent winding. The assembly is also able to transmit tensile force through the cable 52.

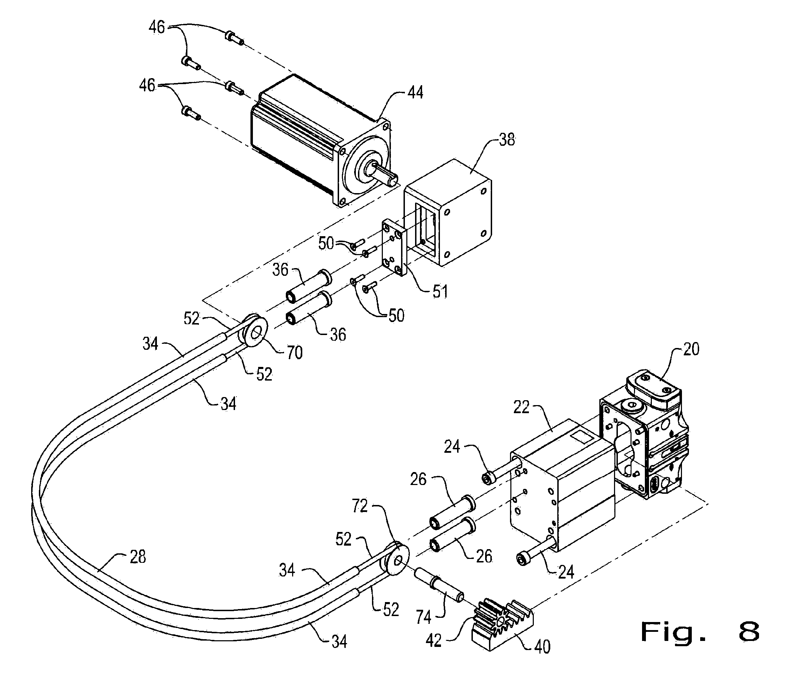

Fig. 8 shows another embodiment of the invention. A gripper head 20 includes the gripping jaws and those components responsible for moving and guiding the jaws. A cover 22 is attached to the gripper head 20 with threaded fasteners 24. Ferrules 26 are attached to the gripper cover 22 by adhesive bonding or other suitable means. An output end of a cable 52 of a cable assembly 28 passes though axially aligned holes in the ferrule 26 and in the cover 22; wraps tangentially around a pulley 72, and exits the cover 22 and ferrule 26 though axially aligned holes in the cover 22 and ferrule 26, respectively. The ferrule 26 is threaded or adhesively bonded onto the distal end of a sheath 34 of the cable assembly 28. The ferrule 26 is threaded or adhesively bonded onto the distal end of a sheath 34. The proximal end of the sheath 34 is threaded or adhesively bonded into a ferrule 36. Ferrules 36 are attached to a motor cover 51 by adhesive bonding or other suitable means. Threaded fasteners 50 attach the motor cover 51 to a motor housing 38. The input end of the cable 52 of the cable assembly 28 passes though axially aligned holes in the ferrule 36 and in the motor cover 51; wraps tangentially around a pulley 70, and exits the cover 51 and ferrule 36 though axially aligned holes in the cover and ferrule, respectively. The pulley 70 is coupled to the shaft of an actuator 44, shown here as a motor, to convert the rotary motion of the motor 44 into a corresponding linear motion of the cable assembly cable 52, which is free to slide axially within sheath 34. Threaded fasteners 46 attach the motor 44 onto the motor housing 38. The ends of a shaft 74 are contained in complimentary grooves (not shown) in the interior of the gripper cover 22, which prevent translation of the shaft 74 while allowing unencumbered shaft rotation. A pulley 72 and a pinion 42 are coupled to the shaft 74, so that rotational motion of the pulley 72 causes a corresponding rotation of the pinion 42. The pinion 42 is engaged into a rack 40 to convert the rotary motion of the pulley 72 into a corresponding linear motion of the rack 40 to move the gripper jaws. The cable 52 engages the input pulley 70 and output pulley 72 with means that prevent the tangential movement of the cable 52 with respect to the pulleys. In this manner, rotation of the input pulley 70 causes a corresponding rotation of the output pulley 72 with a quantity of torque transmitted between the pulleys. Although the pitch diameters of the pulleys are shown as equal in Fig. 8, it is understood that the ratio of the two pulley pitch diameters can be varied so as to alter the torque and rotational velocity transmitted between the pulleys.

The cable assembly 28 can comprise any construction capable of transmitting only tensile force, only compressive force, or both tensile and compressive forces, while allowing sufficient flexure to accommodate relative motion between the gripper head and actuator. Ideally, the transmission of the tensile or compressive force though the cable assembly occurs with minimal or substantially no parasitic loss so that the majority of the force applied to the input pulley 70 of the cable assembly 28 is available at the output pulley 72 to move the jaws of the gripper. Such cable assemblies are used to control bicycle gear shifting mechanisms.

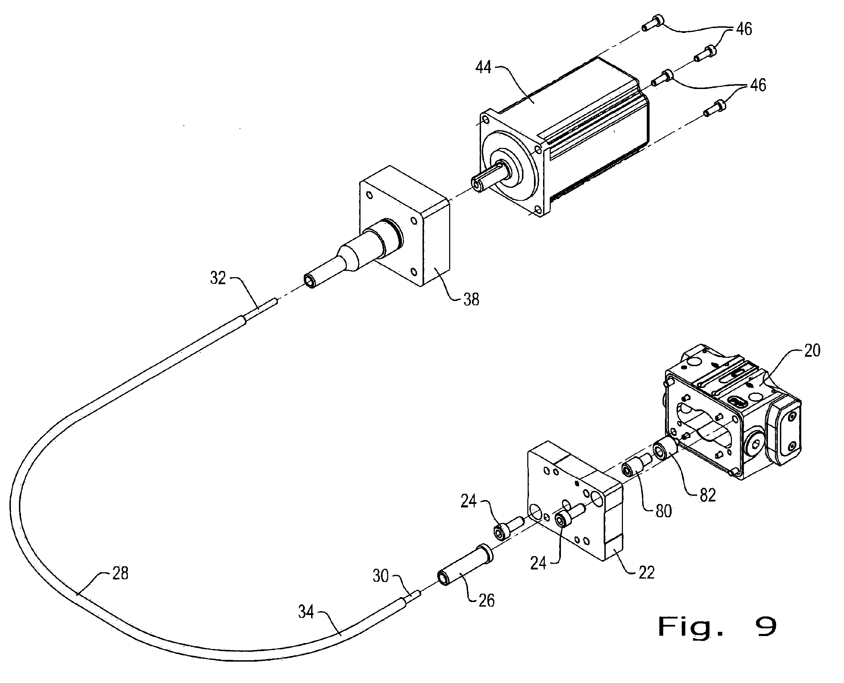

Fig. 9 shows yet another alternative embodiment of the gripper. A gripper head 20 includes the gripping jaws and those components responsible for moving and guiding the jaws. A cover 22 is attached to the gripper head 20 with threaded fasteners 24. A ferrule 26 is attached to the gripper cover 22 by adhesive bonding or other suitable means. An output end 30 of a cable assembly 28 passes though axially aligned holes in the ferrule 26 and in the cover 22 and is attached by threading into a lead screw 80. A lead nut 82 is engaged by the lead screw 80 with the opposing end of the lead nut 82 attached by threading or other suitable means to the appropriate component within the gripper head 20 responsible for moving the gripper jaws. The opposing end of the ferrule 26 is threaded or adhesively bonded onto the distal end of a sheath 34 of the cable assembly 28 (see also Fig. 3). The proximal end of the sheath 34 is threaded or adhesively bonded into the ferrule end of a motor housing 38. An input end 32 of the cable assembly 28 passes through a hole in the motor housing 38 and is coupled into the shaft of an actuator 44, shown here as a motor, to convert the rotation of the motor shaft into a corresponding rotation of the input end 32, output end 30 and lead screw 80. The rotation of the lead screw 80 is converted into a corresponding linear motion of the non-rotating lead nut 82 to move the gripper jaws. Threaded fasteners 46 attach the motor 44 to the motor housing 38.

The cable assembly 28 can include any construction capable of transmitting torque, while allowing sufficient flexure to accommodate relative motion between the gripper head 20 and actuator 44. Ideally, the transmission of the torque though the cable assembly 28 occurs with minimal or substantially no parasitic loss so that the majority of the torque applied to the input end 32 of the cable assembly 28 is available at the output end 30 to move the jaws of the gripper. Such cable assemblies are used to control automotive speedometer mechanisms.

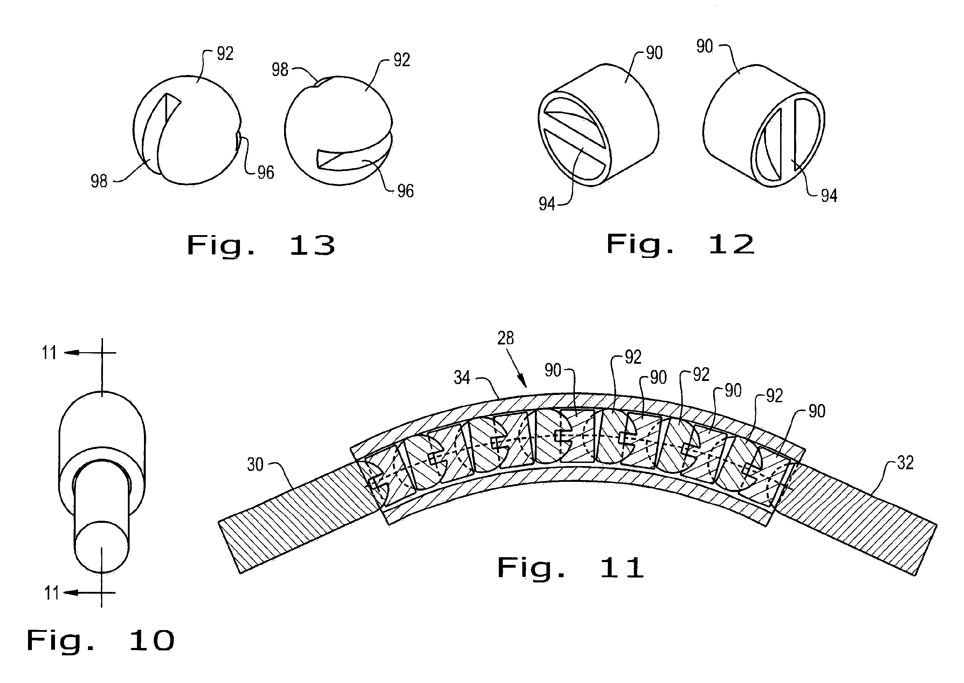

Figs. 10, 11, 12 and 13 show an alternative embodiment of a cable assembly 28, which is suitable for the transmission of torque. A short length of the cable assembly 28 is shown for illustrative purposes and it is understood that the overall length of the assembly can be increased or decreased as desired. An input end 32 and an output end 30 bound a plurality of cylindrical couplings 90 interdisposed with a plurality of spherical couplings 92, which are surrounded by a flexible sheath 34. The cylindrical couplings 90 can possess a spherical cavity on each end of a cylindrical body. Each cavity is divided by a rectangular tab 94 with the center of the tab 94 located coincidently with the longitudinal axis of the cylinder. The longitudinal axis of each tab 94 is chosen to be orthogonal to that of the other tab 94. The spherical couplings 92 possess a spherical radius complimentary to the radius on each end of the cylindrical couplings 90. The spherical diameter of the spherical couplings 92 is interrupted by two rectangular slots 96, 98 with the center of each slot located coincidently with center of the spherical diameter. The longitudinal axis of each slot is chosen to be orthogonal to that of the other slot, with the width of the slots complimentary to the width of the tabs 94 of the cylindrical couplings 90. The complimentary spherical radii and slot and tab widths allow alternating spherical and cylindrical couplings to nest and be nested by adjacent couplings with the tab of each cylindrical coupling 90 engaging the slot of mating spherical coupling 92 so that the column of couplings shares a common centerline. As the cable assembly 28 is laterally flexed, each coupling is free to rotate unencumbered about the center of its spherical radius parallel to the longitudinal axis of a slot or tab, while maintaining a common line of contact with an adjacent coupling. In this manner, the line of contact between each adjacent pair of couplings remains normal to the radius of curvature of the flexed sheath 34. The engagement of slots 96, 98 and tabs 94 prevent rotation of one coupling around the line of contact with an adjoining coupling, allowing the transmission of torque between couplings along the line of contact. The input end 32 and output end 30 possess a spherical radius and complimentary slot on one end in an analogous manner to the spherical couplings 92. The radius and slot on the end of the input end 32 allow the end to nest into the complimentary spherical cavity on the first cylindrical coupling on the proximal end of the cable assembly 28 and the radius and slot on the end of the output end 30 allow the output end to nest into the complimentary spherical cavity of the last cylindrical coupling on the distal end of the cable assembly. The completed cable assembly 28 is thusly able to transmit torque between the input end 32 and output end 30 along the longitudinal axis of the cable assembly 28.

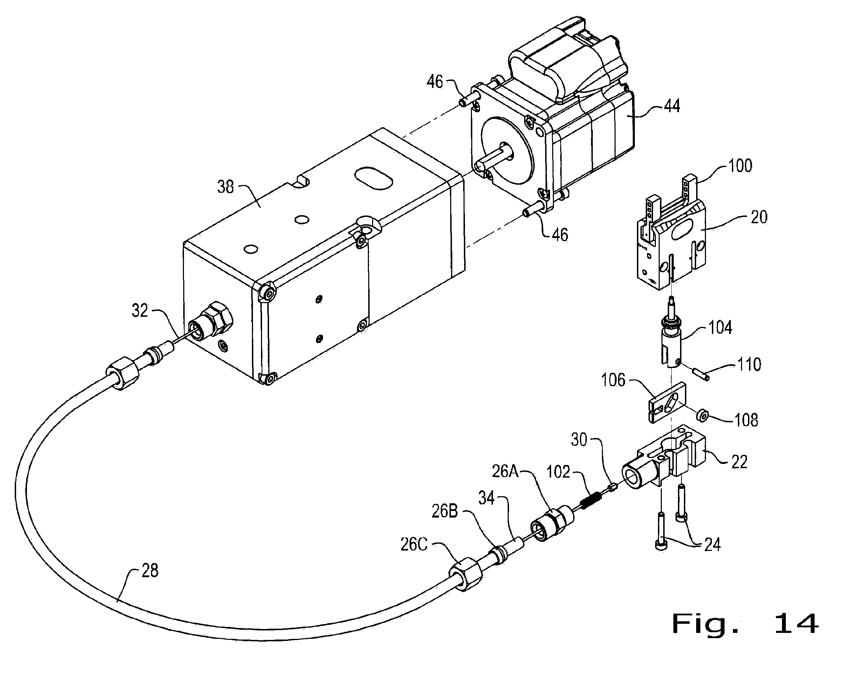

Fig. 14 shows another embodiment of the invention. A gripper head 20 includes the gripping jaws 100 and those components responsible for moving and guiding the jaws. A cover 22 is attached to the gripper head 20 with threaded fasteners 24. A ferrule is attached to the gripper cover 22 by adhesive bonding or other suitable means, including a clamping ferrule design that allows easy reduction of cable length in the field. The ferrule shown as components 26A, 26B, and 26C is a clamping style ferrule. To minimize overall height of the assembly, the ferrule is shown located perpendicular to the gripper body. A cam assembly 106, 108, 110 within the cover 22 transfers the motion of a cable assembly 28 to a linear converter 104. The cam 106, 108, 110 could be eliminated and the cable assembly 28 connected directly to the linear converter 104 if assembly height did not need to be minimized. An output end 30 of the cable assembly 28 passes through the ferrule 26A, 26B, 26C and cover 22 and is attached either to the cam 106, 108, 110 or directly to the linear converter 104 within the gripper head 20. The drawing shows a swaged end fitting on the cable but any suitable means of securing the cable may be used. A spring 102 is positioned to push directly on either the cam assembly 106, 108, 110 or on the linear converter 104. This spring 102 provides positive driving force to the gripper jaws 100 and may be used to retain the gripper jaw position in the event that the cable assembly 28 should fail. The opposing end of the ferrule 26A, 26B, 26C is suitably attached to the distal end of a sheath 34 of the cable assembly 28. The proximal end of the sheath 34 is suitably attached into the ferrule end of a motor housing 38. An input end 32 of the cable assembly 28 passes through a hole in the motor housing 38 and is coupled to the shaft of an actuator 44, shown here as a motor, via a mechanism that converts the rotation of the motor shaft to a linear motion of an input end 32 and therefore, an output end 30. The mechanism to convert the actuator rotary motion to linear motion may use any suitable means, including, but not limited to the rack and pinion; lead screw and lead nut; or pulley systems previously described. The motion of the output end 30 can be converted by a corresponding linear converter 104, either through the cam assembly 106, 108, 110, or directly as previously mentioned, to move the gripper jaws 100. The motor housing 38 may also include provisions for mounting position sensors to infer the jaw 100 position based on the location of the end of the cable assembly 28. This would be useful to eliminate the need for sensors on the gripper itself, or could be used in conjunction with sensors on the gripper to easily detect the failure of the cable assembly 28. Threaded fasteners 46 attach the motor 44 to the motor housing 38. The cable assembly 28 can be any construction capable of transmitting tension, while allowing sufficient flexure to accommodate relative motion between the gripper head 20 and motor 44. Ideally, the transmission of the force though the cable assembly 28 occurs with minimal parasitic loss so that the majority of the force applied to the input end 32 of the cable assembly 28 is available at the output end 30 to move the jaws of the gripper. Such cable assemblies are used to control automotive carburetor throttle mechanisms.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.
The invention comprises aspects which are disclosed in the sentences below, which are part of the description, but not claims in accordance with J15/88 of the boards of appeal

### Sentences

1. A device for gripping an object, comprising:
   a gripper head including at least one movable jaw;
   an actuator located remotely from said gripper head; and
   a cable assembly connecting said gripper head to said actuator, said cable assembly configured to drive said gripper head by said actuator.
2. The device of sentence 1, wherein said actuator produces one of a rotational force and a translational force.
3. The device of sentence 2, wherein said cable assembly comprises:
   an input end connected to said actuator;
   an output end connected to said gripper head;
   a cable connecting said input end and said output end; and
   a sheath disposed over said cable.
4. The device of sentence 1, wherein said actuator is one of a rotary motor, a linear motor, and a piston and cylinder arrangement.
5. The device of sentence 3, further comprising a plurality of force transmitters disposed over said cable within said sheath.
6. The device of sentence 5, wherein at least one of said input end and said output end are configured to engage at least one of said plurality of force transmitters.
7. The device of sentence 5, wherein said plurality of force transmitters are spring windings.
8. The device of sentence 6, wherein said plurality of force transmitters are spherical beads with a spherical cavity and a bore.
9. The device of sentence 1, wherein said cable assembly comprises:
   a plurality of spherical couplings having a first slot formed in each of said plurality of spherical couplings and a second slot formed in each of said plurality of spherical couplings that is on an opposite side of each of said plurality of spherical couplings from said first slot and formed orthogonally to said first slot;
   a plurality of cylindrical couplings with a tab forming the diameter of each of said plurality of cylindrical couplings that is configured to fit into at least one of at least a portion of said first slot and at least a portion of said second slot of an adjacent two of said plurality of spherical couplings;
   an input end connected to said actuator that is configured to engage one of said first slot, said second slot, and said tab;
   an output end connected to said gripper head that is configured to engage one of said first slot, said second slot, and said tab; and
   a sheath disposed over said plurality of spherical couplings and said plurality of cylindrical couplings and at least a portion of said input end and said output end.
10. The device of sentence 3, further comprising a linear converter connecting said output end to said gripper head.
11. The device of sentence 10, wherein said linear converter comprises a rack and a pinion.
12. The device of sentence 10, further comprising a cam assembly connecting said output end to said linear converter.
13. The device of sentence 12, further comprising a spring disposed adjacent to said cam assembly, said spring configured to apply a driving force to at least one of said cam assembly and said linear converter.
14. The device of sentence 10, wherein said linear converter comprises:
   a lead nut connected to said gripper head; and
   a lead screw that engages said lead nut and is connected to said output end.
15. The device of sentence 1, wherein said cable assembly comprises:
   a first pulley connected to said actuator;
   a second pulley connected to said gripper head;
   a cable forming a loop around said first pulley and said second pulley; and
   a sheath disposed over at least a portion of said cable.
16. The device of sentence 15, further comprising a linear converter connecting said second pulley to said gripper head.
17. The device of sentence 3, further comprising a linear converter connecting said actuator to said input end.
18. The device of sentence 4, wherein said cable comprises a plurality of polymer filaments.
19. The device of sentence 3, wherein said cable is configured to transmit force with substantially no parasitic loss.

## Claims

1. A device for gripping an object, comprising:
a gripper head including at least one movable jaw;
an actuator located remotely from said gripper head; and
a cable assembly connecting said gripper head to said actuator, said cable assembly configured to drive said gripper head by said actuator.

2. The device of claim 1, wherein said actuator produces one of a rotational force and a translational force.

3. The device of claim 2, wherein said cable assembly comprises:
an input end connected to said actuator;
an output end connected to said gripper head;
a cable connecting said input end and said output end; and
a sheath disposed over said cable.

4. The device of at least one of the claims 1 to 3, wherein said actuator is one of a rotary motor, a linear motor, and a piston and cylinder arrangement.

5. The device of at least one of the claim 3 to 4, further comprising a plurality of force transmitters, especially spring windings, disposed over said cable within said sheath.

6. The device of claim 5, wherein at least one of said input end and said output end are configured to engage at least one of said plurality of force transmitters, especially beads with a spherical cavity and a bore.

7. The device of at least one of the claims 1 to 6, wherein said cable assembly comprises:
a plurality of spherical couplings having a first slot formed in each of said plurality of spherical couplings and a second slot formed in each of said plurality of spherical couplings that is on an opposite side of each of said plurality of spherical couplings from said first slot and formed orthogonally to said first slot;
a plurality of cylindrical couplings with a tab forming the diameter of each of said plurality of cylindrical couplings that is configured to fit into at least one of at least a portion of said first slot and at least a portion of said second slot of an adjacent two of said plurality of spherical couplings;
an input end connected to said actuator that is configured to engage one of said first slot, said second slot, and said tab;
an output end connected to said gripper head that is configured to engage one of said first slot, said second slot, and said tab; and
a sheath disposed over said plurality of spherical couplings and said plurality of cylindrical couplings and at least a portion of said input end and said output end.

8. The device of at least one of the claims 3 to 6, further comprising a linear converter connecting said output end to said gripper head.

9. The device of of claim 8, wherein said linear converter comprises a rack and a pinion.

10. The device of at least one of the claims 8 to 9, further comprising a cam assembly connecting said output end to said linear converter.

11. The device of claim 10, further comprising a spring disposed adjacent to said cam assembly, said spring configured to apply a driving force to at least one of said cam assembly and said linear converter.

12. The device of at least one of the claims 8 to 11, wherein said linear converter comprises:
a lead nut connected to said gripper head; and
a lead screw that engages said lead nut and is connected to said output end.

13. The device of at least one of the claims 1 to 6, wherein said cable assembly comprises:
a first pulley connected to said actuator;
a second pulley connected to said gripper head;
a cable forming a loop around said first pulley and said second pulley; and
a sheath disposed over at least a portion of said cable.

14. The device of claim 13, further comprising a linear converter connecting said second pulley to said gripper head.

15. The device of at least one of the claims 3 to 14, further comprising a linear converter connecting said actuator to said input end.

16. The device of at least one of the claims 4 to 15, wherein said cable comprises a plurality of polymer filaments.

17. The device of at least one of the claims 3 to 16, wherein said cable is configured to transmit force with substantially no parasitic loss.
